# EUROPEAN PATENT APPLICATION

(11) **EP 1 039 764 A1**
(43) Date of publication of application: **27.09.2000**
(21) Application number: 99302324.1
(22) Date of filing: 25.03.1999
(51) Int. Cl.: H04Q 3/00

(54) **Telecommunications network**

(71) Applicant: BRITISH TELECOMMUNICATIONS public limited company, London EC1A 7AJ (GB)
(72) Inventor: The designation of the inventor has not yet been filed

(57) **Abstract**

A telecommunications network generally represented by service switching points (SSP) (2) and digital local exchanges (DLE) (3), includes a service management platform (SMP) (1). The SMP (1) provides management of account calling, for example using calling cards. Each card call results in the establishment of a call handling session within the SMP (1), the call handling session comprising a number of service function blocks the sequence being selected in dependence upon the type of card in use. Session context data is established in respect of each call handling session, some of the data therein being derived from the card type while other data therein is modified at points throughout the call by respective service function blocks.

## Description

The present invention relates to telecommunications networks and more particularly to a service platform for use therein.

As telecommunications networks become more sophisticated and high speed signalling in the networks enable progressively more complex services to be provided to customers, a customer's expectation of being able to use telecommunications network services also increase. Such is the demand for variation in payment plans and procedures to be varied to meet customer requirements that the number of account calling functions provided by the network have increased.

Thus, account calling cards issued by PSTN operators have varying facilities associated with different card holders. Thus some pre-paid phone cards may be issued some of which may be one time only cards and some of which may be rechargeable either by use of network terminals or by communicating with an operator or an automated function to recharge using a credit or debit card.

Still other cards may in effect be reverse charge calling cards to a specified service or telephone number, whereby keying in card attributes causes a call to be set up through the network to a destination, the destination customer or another account holder having agreed to pay for the calls.

In a still further variation, a calling card account may be billed to a customer's residential or business telephone account.

In the past it has been common practice to handle each kind of communications card using a separate dedicated function, in some cases limiting the usage of calling cards to a particular area where card handling facilities existed. Each kind of different account call would necessarily be handled in a different manner and could give rise to the need for multiple reprogramming of telecommunications switches in the network simply to handle changes in account calling types as represented by different kinds of pre-pay and post-pay cards.

According to the present invention there is provided a telecommunications network service platform responsive to incoming signals indicative of an account type call to establish a call handling session and in respect of each such session to establish a session context data store to which call specific data is written, the call handling system comprising a multiplicity of service function blocks and means responsive to data derived from network signals to select from the multiplicity of service function blocks a sequence of service blocks for providing service and effecting call handling, each service function block utilising specific parameters from the session context data in combination with input signalling to determine further progress and to amend parameters held in the session context data for use by subsequent service function blocks.

A telecommunications service platform in accordance with the invention will now be described by way of example only with reference to the accompanying drawings of which:
Figure 1 is a block schematic diagram of a telecommunications network including a service management platform in accordance with the invention;
Figure 2 is a representation of data associated with cards for use in the network of Figure 1;
Figure 3 is a data flow diagram relating to provisioning of new service scripts;
Figure 4 is a data flow diagram relating to the provisioning of pre-paid cards;
Figure 5 shows interconnection of a number of service functions blocks; as an example of a simple call handling procedure;
Figure 6 shows a further call handling logic diagram showing how a particular parameter in session context data is modified;
Figures 7 to 23 show service functional blocks together with allowable inputs and outputs to each of said blocks;
Figure 24 shows more complete interaction of service functional blocks for establishing a card call;
Figure 25 is a data flow diagram for a call centre;
Figure 26 shows interaction with a fraud management system;
Figure 27 shows a real-time pricing arrangement; and
Figure 28 shows the service management platform and its associated interactions with other parts of the network.

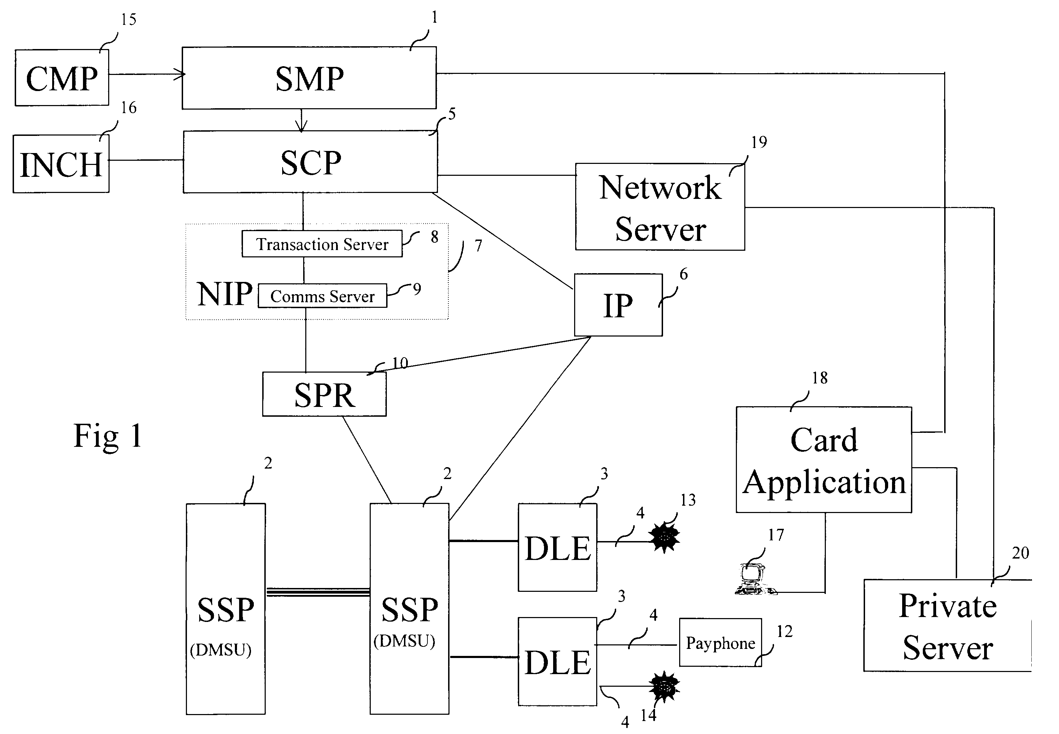

Referring first to Figure 1, the service management platform (SMP) 1 of the invention may be one of several SMPs in a public switched telephone network (PSTN) having at least in part digital intelligent network functionality. The PSTN is here represented by two digital main switching units 2 hereinafter referred to as service switching points (SSPs). Each SSP 2 will provide switching control facilities to a number of digital local exchanges (DLEs) 3, only two of which are shown for simplicity.

Each DLE 3 provides customer service to customer lines 4.

In a so-called intelligent network signalling interchange defining call origin, destination or service telephone numbers and the like cause triggering within SSPs to cause the SSP 2 to refer using, for example, intelligent network application protocol on C7 signalling, to service control point (SCP) 5 of which there may be more than one within the network. The SCP uses the information received from the SSP 2 to determine what further handling is required. The SCP 5 then returns signalling to the SSP2 to cause the SSP 2 to set up paths through the network either to a destination customer line or to a so-called intelligent peripheral, only one of which is shown at 6, so that interchange between the intelligent peripheral and the calling customer may occur. Intelligent peripherals in the network enable voice instructions to be provided to a calling customer and may act to collect signalling representing further digits from the customer to be passed to the SCP 5 to enable the call to be completed.

In the case shown here, the SCP 5 sits above a network intelligence platform (NIP) 7 and provides messaging and instructions relating to account calling by way of a transaction server 8 and a communications server 9. A signalling point relay function is shown at 10, which serves to transfer signalling messages from the SCP 5 and the NIP to the SSP 2 and the intelligent peripheral 6. The SMP 1 in combination with the SCP 5 respond to card calls originating anywhere in the network, for example from a payphone 12 or ordinary customer telephones 13, 14, where billing is to be done other than to the account associated with the specific line. The SMP 1 is required to interface with a large number of other systems some of which are shown in Figure 28 to which reference will be made shortly. One such system is the credit management process 15 which in respect of specific accounts may instruct the SMP to bar or unbar telephone calls using a particular account card or cards. Also shown at 16 is a charging sub-system which provides an interface to a credit card validation network so that recharging of pre-paid cards may be carried out. An operator assistance function 17 is also provided supported by an operator assistance application 18. This permits new cards to be issued or validated and provides assistance to card holders who may have difficulty in setting up calls. For this purpose the SCP 5 may communicate with the operator assistance terminal 17 by way of a network server 19 and a private server 20. Thus, if it is determined by the SMP 1 that operator assistance is desirable a call connection to a voice communication path to an operator (path not shown) is established through the SSP DLEs to the call centre, and call details are passed by way of the network server 19 to a call centre server 20 which enables the operator to determine what potential problems there are or to forward card details by way of a direct link to the SMP 1 for existing cards or to provide new account calling information.

Turning briefly to Figure 28, other interfaces between the SMP 1 and other functions are shown. The SMP 1 necessarily interfaces with other card system service nodes represented at 21 so that existing card system servers can continue to function.

The SMP 1 also interfaces with a customer service system (CSS) 22 providing, for example, card details in a data file which the CSS may forward to the credit management process 15 and to a card platform interface 23. The CSS 22 may result in further information being provided to the SMP from the card platform interface 23 in connection with particular cards. Interfaces to card production facilities and billing may be by way of batch management process 24 which controls the production of phone cards at an appropriate centre 25 and arranges for billing of certain account cards by way of a billing process 26. Card top-up and the like may be handled by pre-paid card settlements 27 where the SMP 1 obtains authorisation from the charging system 16. A further input to the SMP 1 comes from a charging database 28 which allows the SMP 1 to determine the cost of calls to be deducted from pre-paid settlements and/or for billing information to be provided for post-call accounting.

The platform also interfaces with a fraud management system 29 providing near real-time card usage information to the management system 29 so that calls which may be of a fraudulent nature, that is to say using stolen or illicitly obtained account information may be curtailed.

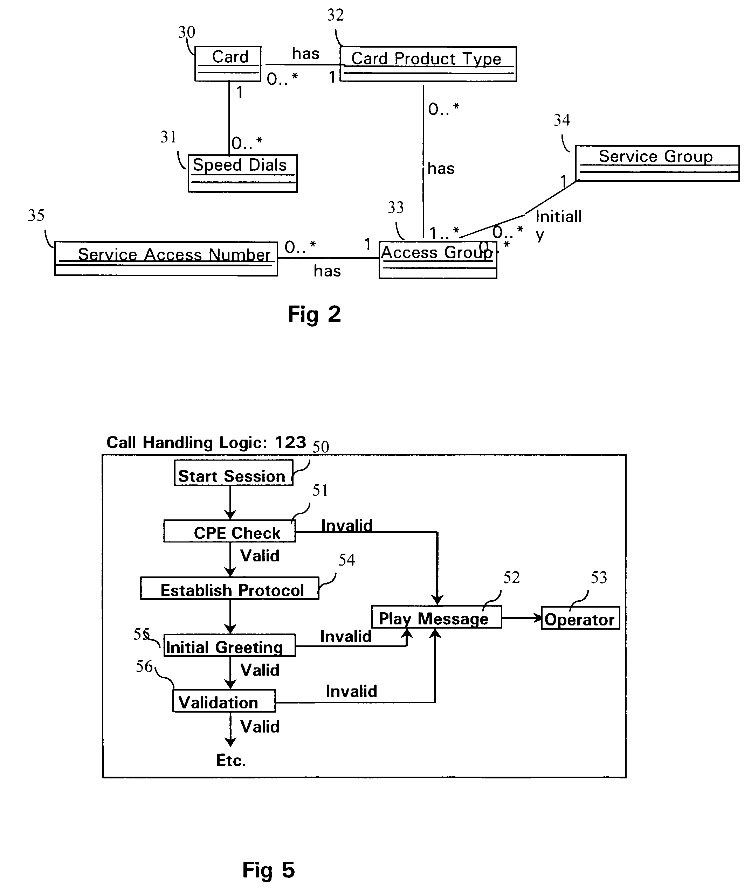

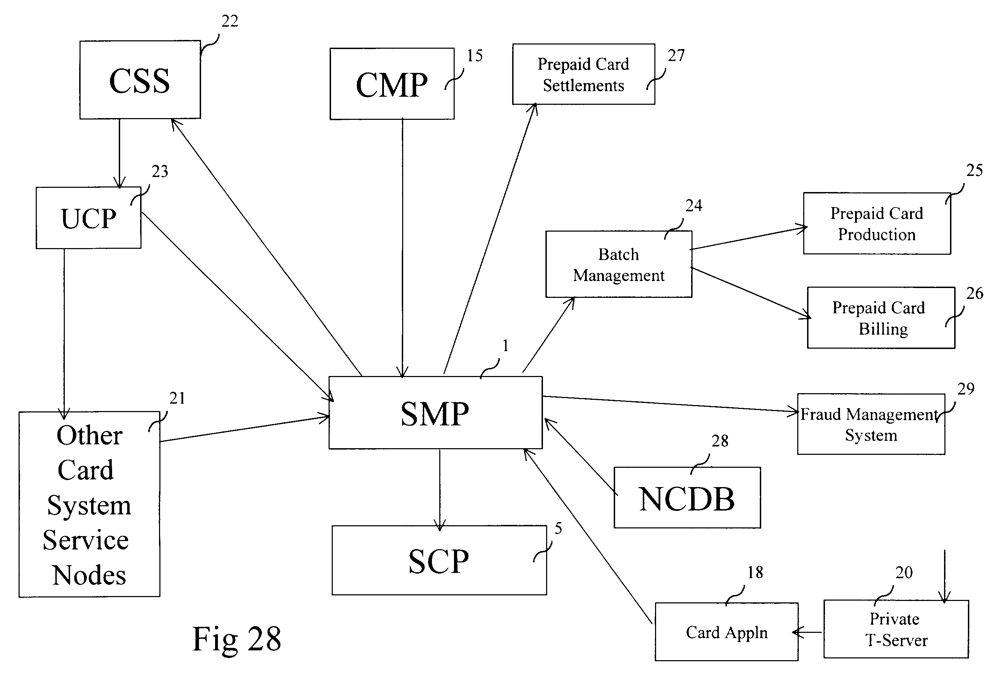

Turning now to Figure 2 the data required to be stored in respect of any card and the interrelationship between that data is shown as a high level schematic. Every card account, whether keyed from a telephone or swiped through a card reader has an associated set of data held at the SMP. Thus for a card 30 there may be a number of abbreviated dialling codes associated specifically with the card. Thus, once the customer has entered or swiped the card the system determines the card number and after the customer entering a personal identification number (PIN) (if required) will respond to certain key strokes from the customer to connect calls through the network in dependence upon speed dial or stored numbers 1. Customers of non-dedicated destination cards may of course key in a complete telephone number to enable a call to be established.

Every card 30 has to be allocated to a card product type 32. Examples of card product type include charge cards, international charge cards, pre-paid cards, "ring me free" service access cards, greetings cards and opt in credit calling cards which may be charged from a credit or debit card account for example. The card platform is accessed by way of a service access number which can be grouped together into access groups 33, so that attributes such as a greeting script to be announced to the customer and service group 34 can be shared by a collection of service access numbers 35. The services group identifies the call handling logic (hereinafter described) which is to be used. Call handling logic depends on call progression and will vary from service group to service group. For example, at the start of a call the card product type may not be known because the caller has not yet entered the account number and PIN. Thus the call handling logic depends on the service access number used which may be card product type dependent but may be common to a number of different card product types. Once the card product type 32 has been derived then the call handling logic can be selected for the specific card product type.

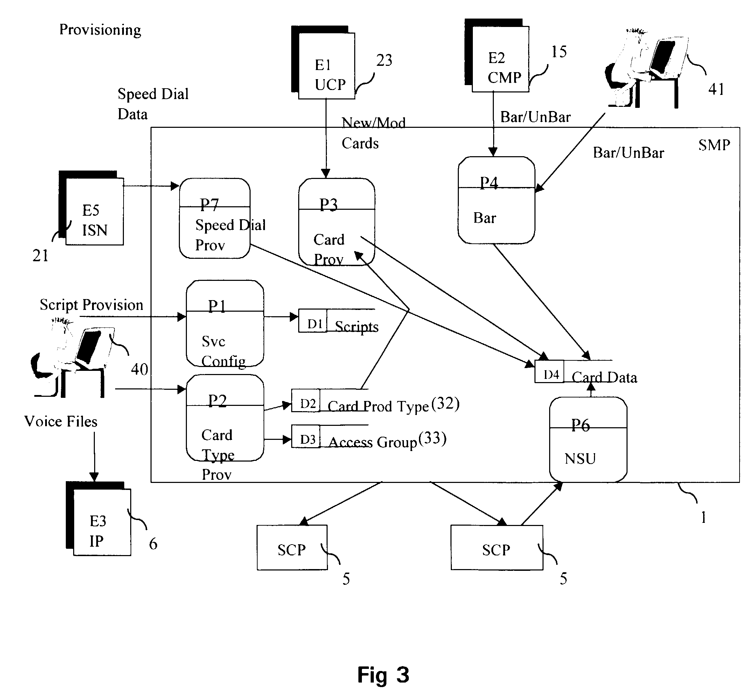

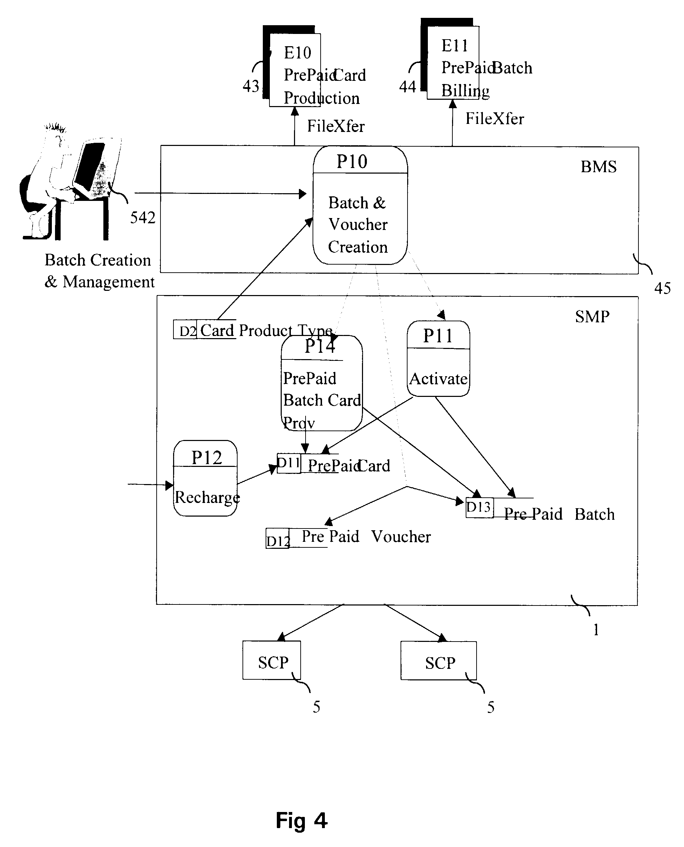

The creation of the data fields of Figure 2 and control of some of the functions of the system will now be considered with reference to Figures 3 and 4, which are data flow diagrams respectively for provisioning services and card types and for provisioning pre-paid card creation and management.

In Figure 3 a first user interface 40 is provided which will configure services by selecting from functional service blocks the progress of calls in respect of particular card types. Thus a service configuration process P1 has associated data storage D1 to which program scripts are provided. A card type process P2 is also programmed from the user interface 40, the card type process P2 providing data to a data store D2 having a card product type and a data store D3 for the respective access group associated with the card types. Appropriate voice files to be associated with a particular service configuration script are provided to the intelligent peripheral 6 to enable appropriate voice prompts to be provided to customers.

Card provisioning details are provided from a universal card platform 23, which passes data files containing card provision details to the card provisioning program P3. The information provided will define an action to be performed against card data 31 held in data store D4 together with other identifying data which enable actions to be performed. Actions which maybe required, for example, are to add additional cards, delete existing cards or change an existing card.

Also acting on the card data in data store D4 is a barring and unbarring process P4 which responds to requests either from credit management process 15 or from a further interface 41 for a credit control function. The barring process P4 responds to requests by modifying the card data 31 in D4 to permit or cease call connection using a particular card.

The intelligent peripheral 6 responds to scripts and voice files driven by call handling logic of the SCP 5. Voice scripts are aligned by their identity which is common in the intelligent peripheral 6 and in the scripts held in D1 for the service configured by the SMP 1. An intelligent service node corresponding to one of the said service nodes 21 is provided to enable transfer of cards from other nodes and in particular to enable a speech style process P7 to transfer existing short code dialling information from an existing card service to the data field associated with the particular card in D4.

In respect of pre-paid cards, (turning to Figure 4) for example pre-paid phonecards distributed by way of retail outlets, input from a user interface 42 is provided to process P10 which creates batch management data using information from the data store D2 and the customer input. The process P10 creates a data file which is transferred to a card manufacturer 42 for production of the physical cards associated with the entry.

Each pre-paid card production run authorised by the batch management creation process P10 results in a billing file being created which is forwarded to a billing process 44, which controls invoicing to the retail distributor. Within the SMP 1 details of the batches created by the batch management system 45 are stored. Thus direct data transfer from the process P10 to data storage D12 and data storage D13 allows information on pre-paid service vouchers and pre-paid card batches to be stored. Data from process P10 is also used by a process P14 to store data at D11 relating to pre-paid cards. An activation process P11 is responsive to, for example, date and time information, to provide activation of pre-paid cards or pre-paid batches as appropriate. A process P12 responsive to credit card transactions, for example from the intelligent network charge handling function 16 of Figure 1 also modifies data in relation to pre-paid card details in the data store D11.

Referring specifically to the process P1, the service configuration process selects scripts from the available scripts to cause prompts to be played or not played, and digits to be collected or not collected. Service provision may include the ability to support a number of different languages so that scripts are selected in accordance with preferred language requirement. The process has the ability to create, modify, delete or suspend card access on the basis of card types or card attributes.

The card type process P2 enables the user to create new card product types and access groupings. It will be appreciated that the card product type and access grouping are compatible with a call logic service script provided by the P1 process. The process will write to card product type access group and service group data stores D2, D3.

Within the provisioning function, in the card product type, a call restriction table applicable to the card may be created so that certain card product types are restricted to, for example local calls, regional calls or for use for calls to particular countries only.

The card product type may also determine service functionality and may be programmed so that particular card numbers within the card product type group can be allocated to several different people each having a respect PIN. Interfaces between the CSS 22 of Figure 28 enable certain card details to be directly modified by the network operator.

Functions such as the inclusion of called party clear or first party clear associated with a particular card type may also specified.

Within a card type facilities provided to customers are usually common. However, certain cards may be permitted additional functions.

The card provisioning process P3 receives data files from the universal card process 23. the files received by the process P3 specifies one of four actions to be carried out, these being:
(i) add a new record;
(ii) update an existing record;
(iii) delete an existing record; and
(iv) update PIN.

An audit trail is created in respect of each card record changed. The audit trail will include a filename, which caused the update, an update type, which indicates the source of the data file, the date and time at which the process received the file and the date and time when the file was processed. A system flag may be set to produce an audit log.

Errors which have transferred across with a data file will be separately logged and will include, for example, the filename in which the record transferred, the date and time at which the error occurred, the type of action performed (if available), the card number (if identifiable) and the cause of the error.

Files will be transferred from each customer service centre (only one of which is shown, each data file detailing operations for a number of cards. To avoid problems which may be caused if multiple changes occur to a data file in sequence in respect of a particular card, the process P3 checks the data file sequence number and, with the exception of a first ever file received from a service centre will not process later files unless and until all preceding files have been received and processed.

Errors which may be identified include, for example, when adding new records if a card record having the same number already exists. In respect of updating or deleting cards from the system, errors are reported if the requested card does not exist.

The provisioning process supports all kinds of card type, and in addition to card type already mentioned such as pre-paid cards, contact cards may be provided in which calls are restricted to a specific destination number. A multiple contact card allows the card holder to access any one of a number of destinations. Card holders cannot change the contact details from contact cards. Such changes are only implementable by the customer service function.

The call barring function P4 has a number of different responses to providing barring status data. A lost or stolen card can be barred and any call attempts using such cards may be diverted to a fraud management system operator. Alternatively, any call attempt using the card may simply be refused.

Process P6, which refers to network side updates, allows a customer to update his PIN by dialling in to the system, keying in the existing PIN and a new PIN. Data prompt and collect may be by way of an intelligent peripheral 6, and when all correct actions occur the PIN is written into the card data so that future attempts to make calls with the card require the new PIN to be entered. Certain cards may be barred from modifying the PIN number associated with them and the availability of PIN change facilities will be determined within the card data held in dependence upon the card product type or the individual card.

Process P7, currently shown as having an input from another intelligent service node, enables customers to have certain telephone numbers associated with their card to enable short code dialling. Dependent again on the card product type speed dialling provision may or may not be permitted, but, where permitted, an input of a telephone number will be associated with a specific speed dial data line in the card data store.
Having discussed the provisioning of cards and the collection and assembly of associated processing scripts and data, consideration is now given to the call handling logic which may be assembled based on the script provision and responses from the customer by way of prompt and collect intelligent peripheral information.

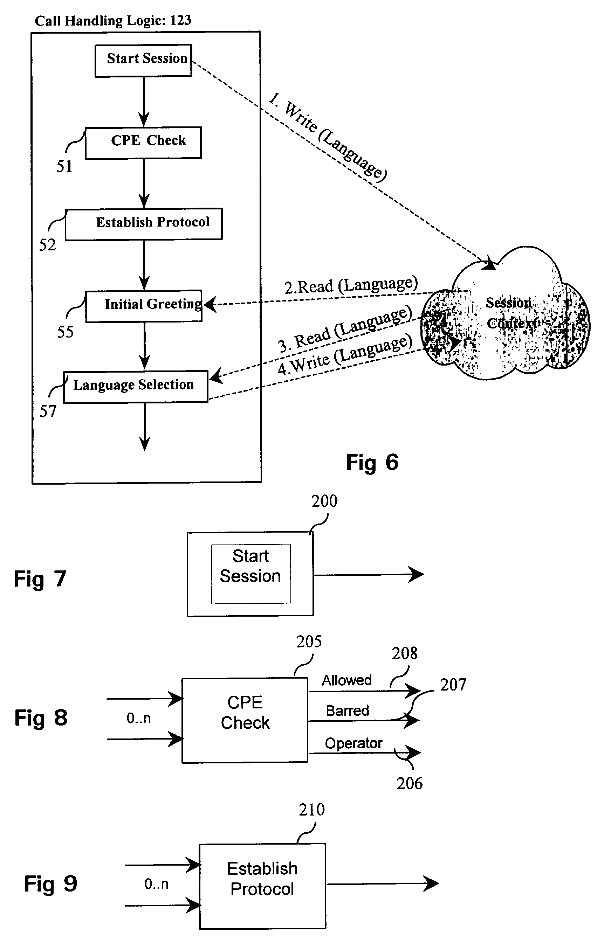

Call handling logic now to be described in part with reference to Figure 5, comprises a series of service functional blocks (SFBs) which each encapsulate an element of call handling behaviour. Each SFB links to other SFBs by one or more branches. Each SFB has the following minimum attributes;
(i) static data (that is data which is configured within the SFB);
(ii) variable data (which arises during call processing);
(iii) permitted input connections;
(iv) permitted output connections (which may be fixed or data driven; and
(v) feature behaviour.

Described hereinafter are SFBs for the following functions:
initiate;
start session;
CPE check;
establish protocol;
play message;
initial greeting;
validation;
credit check;
menu;
origination/destination check;
call connect;
card credit expiry;
check barring;
re originate;
PIN prompt and collect;
account and PIN prompt and collect;
operator connection;
select call handling logic;
re-charge;
language selection;
prompt and collect;
recall; and
end of session.

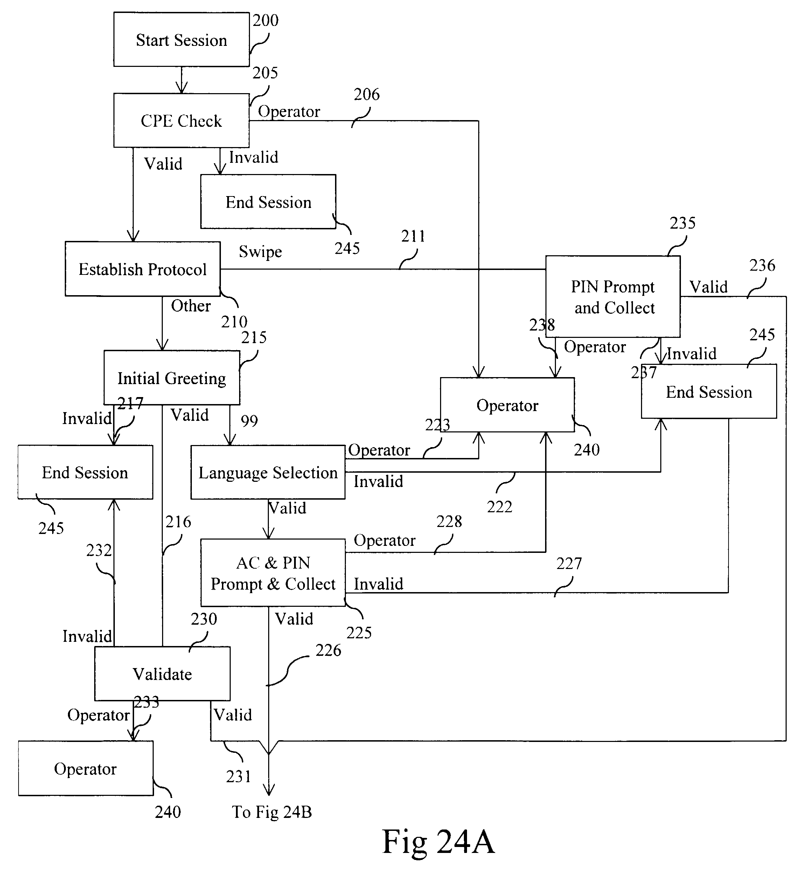

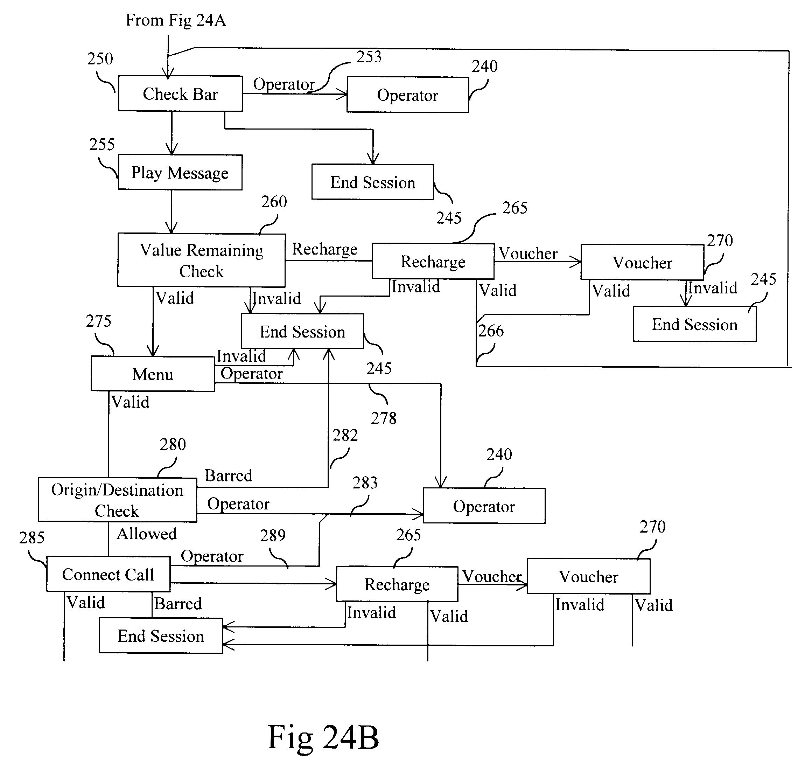

A simple demonstration of call handling logic is shown in Figure 5 to which reference is now made to enable consideration of the functionality of a typical call handling logic function. A more detailed call handling logic interconnection chart is shown at Figure 24 described hereinafter. Returning then to Figure 5, if a customer dials an access code for a card transaction then a start session function opens the process instance to run in respect of the call. The start session 50 establishes a session context data store and may set up, for example, a heartbeat. Once the session is established then the Customer premises equipment (CPE) check SFB will run to determine whether the equipment from which the call originates is valid for processing the kind of call required. From the CPE check SFB 51 an invalid output will result in connection to a play message SFB 52, which plays a script to inform the customer that the call cannot be handled at this time and will pass on the connection to an operator link 53. The alternative output from the CPE check transfers the handling to a protocol selection SFB 54 which hands on the call to an initial greeting SFB 55 which may respond to received digits to determine validity of the call at an early stage or invalidity, in which case it transfers to the play message function 52 then to the operator 53. If the initial greeting is played satisfactorily with no interrupt or with valid digits present, then the call is handed on to the validation SFB 56.

Data transfers between SFBs using a session context temporary data store shown in Figure 6. Thus, for example, in considering one particular parameter namely the language in which the customer requires to receive information, in the start session SFB as the session context is set up a default value of language , which may be based on card product type or access code, is set in the session context data block.

Following the CPE check 51 and establishment of protocol at 52, the initial greeting SFB 53 applies for the language parameter from the session context data. Thus the initial greeting will be in the default language unless in respect of a particular card product type a different language is required. Following the initial greeting at some point during the course of the call handling, the customer may be invited to change the language in which messages are to be heard. Thus the language selection SFB 57 will read the language from the session context data in order to cause output of a language invitation message in the current language. The customer is allowed to select from a number of options of alternative languages and on receipt of a digital code from the calling customer the language parameter may be rewritten to the session context data for use by subsequent SFBs.

Turning now to Figure 24, any card call arriving at the platform will result in a session being started. It is therefore necessary for a start session SFB 200 to carry out the initialisation for this instance. The SFB sets up the temporary session data context store and clears all the values prior to reading from the incoming call record the service access number which it when writes to the data store. The service access number gives an initial indication of the kind of account card call being made. Also extracted from the incoming call record is the calling line identity (CLI) a customer premises equipment code (CPC) value which identifies the equipment type and any ISDN bearer capability indication, each of these three values is now written to the session context data store together with the access group (33 of Figure 2) associated with the particular service access number. The access group is now stored in the session context data together with the attributes of such a group. Using access group attributes the service group and service group attributes are retrieved and stored in the session context data , and based on the service group the call handling logic is selected from the call handling logic scripts with regard to the specific call handling logic required in respect of the current card access.

The start session SFB is thus illustrated figuratively in Figure 7 as being an SFB which arises as a result of an interrupt caused by a card access code being dialled and having a single output to other SFBs as required. The start session SFB has no static data associated with it. The only significant deviation from the behaviour described above occurs if the CLI indicates that the script set should deviate from the normal access group script set. The call handling logic script set is normally dictated by storage in the session context data.

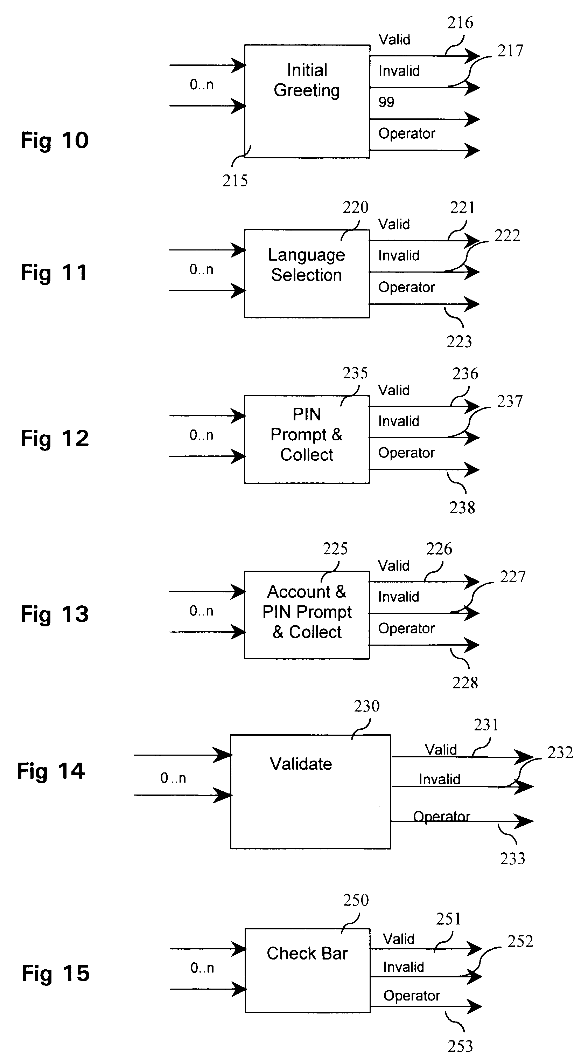

Following the start session 200, it may be expected that a CPE check runs in the session to verify that access from the type of CPE in use is permissible to the access number dialled. For example, CPE types may include payphones, videophones, normal residential phones, ISDN equipments and the like. For each access group defined each CPE type derived from the session context data CPC or ISDN bearer capability information will have an associated action code. The principal codes will be to effect connection of the call to an operator as indicated in Figure 8 at 206, to bar calls to the particular type of CPE 207 or allow calls from a particular type of CPE 208. A fourth alternative may require a script to run in the platform which will take into account CPE type, CLI and other session context data factors to determine whether the call is to be allowed, barred or connected to the operator. Thus, assuming that the call is validly involved in the CPE in use, it is necessary to enter into a protocol negotiation with particular types of equipment. Assuming that, for example the call is originating from a payphone, then the session context data is read along with any international country identifier present therein. Assuming that the call is not international, then if the CPE is a payphone, for example, a tone may be played to set up the protocol between the system and the payphone. If the payphone is one which has a swipe card then during the course of the establishment of protocol the card number will be read and stored to the session context data by processing card swipe details, if a swipe card reader has been used to forward the account number then such things as a language selection based on card number may be carried out, prior to seeking to collect the customer's PIN by exiting on a swipe exit 211. Alternatively, for non-swiped accounts the system exits establish protocol SFB 210 by way of a route to an account and PIN prompt and collect facility 212. As in the case of an exit on 212, an initial greeting output SFB 215 will cause a welcome message to be played and will prompt the caller for an account number and PIN. This SFB will cause an intelligent peripheral, for example to output a message and return collected digits. The session context data will detail time outs the basic language and an operator fall back position availability if the time out should expire and checks for varying pre-number characters such as '*' or '#'. The initial greeting includes an invitation to key '99' to hear instructions in other languages. The outputs from the initial greeting are with a valid account number and PIN 216 with an invalid account number and PIN 217 with an operator connection 218 or with a language selection exit 219. Although language selection 220 may be specifically called from the initial greeting SFB 215, it may also be categorised as a floating SFB which can be called by the customer at any time if the customer account card is for a service having selected language capabilities. The language selection capability is shown in Figure 11 and while the default output will be the language of the country in which the customer is based or another language as appropriate, language section allows a menu output to the caller using a prompt and collect peripheral. If the customer fails to make an entry within a dedicated time out period then the system may fall back to the operator or indeed an operator request may be made by the customer. If the customer does enter a language selection code then the system updates the language parameter in the session context data and all further voice prompts from the platform will be in the appropriate language.

Note that from language selection outputs are valid 221, invalid 222 and operator connection request 223. Coming from language selection, since the account and PIN have not been collected by way of the initial SFB 215, an account and PIN prompt and collect SFB 225 is used to prompt the caller in the appropriate language for entry of the card account number and the PIN. Again the result of a time out may be to connect the call to an operator or in the case of a fraudulent card usage, operator connection may be required. If however the account and PIN prompt and collect is valid, that is to say the customer enters an apparently accurate account and correct PIN the SFB will exit at 226. Where an entry is repeated a maximum number of times, this may result in the session being terminated by exit on route 227.

A further validity check or a first validity check may be carried out by a validate SFB 230, shown also at Figure 14. This SFB will validate a previously entered account number and PIN and if invalid will cause prompting for re-entry of the account number and PIN for a configurable number of attempts. This SFB may generate a fraud log in respect of a particular call which may result in either an operator connection 233 or an invalid link to end the session 232. If the information collected here is valid then the system proceeds as shown by way of link 234 to Figure 24b.

Returning briefly to the establishment of protocol it will be noted that if the account number is automatically recovered by the establish protocol SFB such that it exits on line 211, then a PIN prompt and collect SFB 235, shown in Figure 12, arranges for the customer to be prompted to enter a PIN which can be associated with the stored card number read by the SFB from the session context data. The card number allows the card attributes to be written into the session context together with card product type attributes as shown in Figure 2. The PIN prompt and collect SFB waits for customer input and allows a maximum number of attempts prior to rejecting the call at 237 or causing an operator connection at 238. Assuming that the PIN prompt and collect receives a valid PIN number for the swiped card then it will exit on the valid line 236.

Note that the operator and end session SFBs 240 and 245 respectively are shown several times in the Figure. This is for convenience only and there is no difference between any of the operator SFBs hereinafter described or in the end session SFBs.

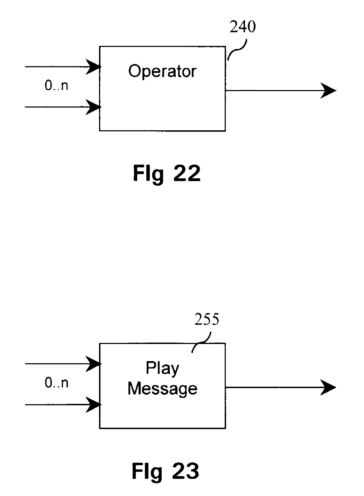

Once a card or account number and PIN have been validated by any route then a check as to whether other constraints, for example barring of specified access due to non-payment or for fraudulent usage reasons. SFB 250, shown in Figure 15, checks the account number against credit limit to determine if a barring indication is present and to determine whether the call is to be connected to an operator or simply barred. The call may be connected to an operator if a credit limit has been reached with detailed information being passed with the call. If the call is barred for fraudulent reasons ie because a card has been reported as lost or stolen, then the call may either be forced to the end session SFB 245 by way of exit 252 or may be passed to the operator for further action via route 253. A fraud log entry may be generated indicating the calling line from which the call originated. If the call is barred for any other reason than fraud or credit limit then a different operator fall back code may be provided. The play message SFB, shown in Figure 23 at 255, is called by many other SFBs with configurable message instructions. The play message SFB will read any language requirements and script sets provided from the other SFBs and will cause playing of announcements and arrange for collecting of prompted digits from the customer. Played announcements may be interrupted by the customer dialling digits which are collected, the play message SFB will return to another SFB with any collected data based on the prompt script being forward.

Now considering the value remaining check SFB 260 will carry out a check based on the input card number or card value to determine whether recharging of the card is permitted. The maximum number of times which a card can be recharged may vary and may be infinite for certain types of card, but the data stored with respect to a particular card number is checked. If there is value remaining on the card then no further action is required and the SFB is exited on the valid line. If there is no value left in the card and recharging is not permitted, then the call will exit the SFB on an invalid link to an end session function. Messages may be played to the customer enabling alternate card entry to enable the call to proceed. If recharging of the card is permitted then the value remaining check will exit 263 to a recharge SFB. The recharge SFB 265 provides the customer with a prompt to determine whether the recharge is to be by credit card, for example, or by means of a pre-payment voucher. If the recharge is to be by way of a credit card, for example, then the recharge SFB may run a script which requests entry of a credit card number, which can be passed by way of the INCH function of Figure 28 for clearance with the credit provider. Assuming that a valid recharge occurs, then the card data is amended and the recharge function exits on a valid line 266 to enable the call to continue. If recharging attempts are shown to be invalid then the system simply clears down the call via the end session link.

If the recharge is to be way of a pre-paid voucher, then a voucher SFB 270 is used which receives details of the voucher by prompt and collect to the customer in an appropriate language and determines from the accounting records whether the voucher recharge is valid, in which case the card account data is updated and the call continues. If an invalid voucher entry is made, then the call may be taken down and the session ended.

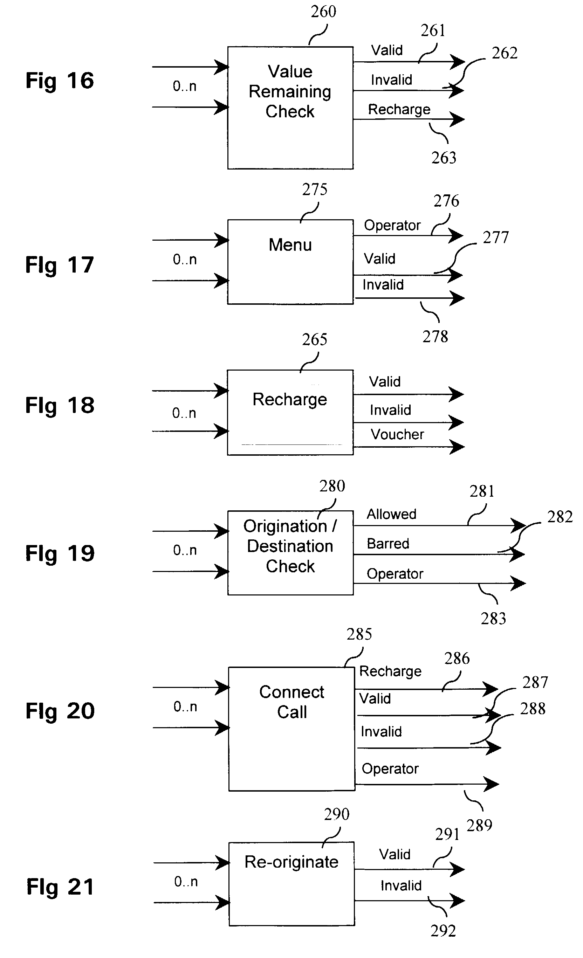

Turning now to Figure 17 in association with Figure 24, assuming that the value remaining check allows, a menu SFB 275 determines onward connection of the customer call. For example, if the information in the session context data has at this time indicated that the card type is a contact card, which is only permitted to connect to a single number, then the menu function exits with appropriate origin and destination number details. If multiple contact numbers or speed dial are permitted, then the menu SFB may cause, prompt and collect to the customer requesting either a speed dial indicator and code or for the full number required to be dialled. The collected digits are written as destination data in the session context data for use by further SFBs. If as a result of the prompt and collect function no digits are received then the call may be connected to the operator on exit 278 or if an invalid response is receive, the menu function may exit at 277 to end the session.

It is here noted that, if at any time during the course of a call, the caller disconnects then the response will be to enter the end session SFB 245.

Now if an origin and destination are available then an origination/destination validity check may be carried out by SFB 280. Again the purpose of this SFB is to determine whether the through call from the origination point to the destination point is valid and allowed. This enables restrictions on calls from certain kinds of CPE or certain CLIs to be prohibited from connecting to specified destinations. If an invalid call is attempted, then it may be either categorised as barred, in which case the call may be taken down and the session ended by exiting on the barred link 282. Alternatively, calls may be designated between specific originating accounts or specific CPEs in combination with specific accounts to be connectable only by way of an operator interconnection in which case the system goes to the operator SFB via exit 283 from the origination/destination check SFB 280.

Finally, with regard to Figure 24, the connect call SFB 285 forwards data to the network and may set maximum call duration, for example, with respect to the CPE type and in respect of pre-paid accounts may take into account the credit available. The connect call function may, in respect of a validity check, invite the calling customer to recharge an account in which case the recharge SFB 265 and/or voucher SFB 270 may be called as hereinbefore described. Otherwise the SFB may exit on line 287 as a valid exit to enable the call to be established by the network in known manner, a final check on valid connection data may be carried out so that the call can be taken down for any of the reasons previously given.

The connect call function is also responsible for calculating when, if required, a warning tone of credit expiry should be forwarded and the duration of that tone and/or whether it should be accompanied by a voice prompt enabling the customer to change account cards or to recharge an existing account card during the course of a call. Again calls which appear to be fraudulent may be transferred to the operator at 289.

Certain SFBs remain on line at all times and are called floating SFBs and will respond to input from the customer at any time during the course of a call. One such SFB is the re-originate SFB shown in Figure 21. Thus, if a customer completes a first call and wishes to make a follow on call without entering card numbers and PINs again, the re-originate SFB may check to determine whether the follow on call function is permitted and whether sufficient credit is available to the customer to enable this to occur and if so may exit on a valid re-originate line to bring the customer in at, for example, the menu SFB 275. An exit on the invalid path from the re-originate SFB 290 may be connected to a fraud operator or to an end session function in dependence upon the session context data.

Returning briefly to Figure 17, it is here noted that the functions supported by the menu SFB include such things as PIN change, speed dial access, onward connection, destination numbers, operator connect, last number redial facility, pre-paid recharge exit, credit announcement, language selection and sub-menus in respect of each of the above if required. Thus if language selection is entered the menu may call the language SFB 220. A PIN change may have a sub-menu which checks the existing PIN, requests input of the new PIN and requests re-input of the new PIN prior to confirming successful change, the sub-menu will of course first check that the customer is entitled to change the PIN.

In the operator SFB, Figure 22, as shown at 240 in Figure 24, the caller is first played a message advising that connection to the operator will now occur. This will be subjected to the language code so that the output script is in an appropriate language and the operator connect may be determined also in dependence upon the language code for example. The reason for the call transfer, for example the point at which the call has reached or the determination that the call is potentially fraudulent or that the customer appears to have miss-entered PIN or account data is passed to the operator call centre along with CLI and any other data context information which may facilitate the operator's task.

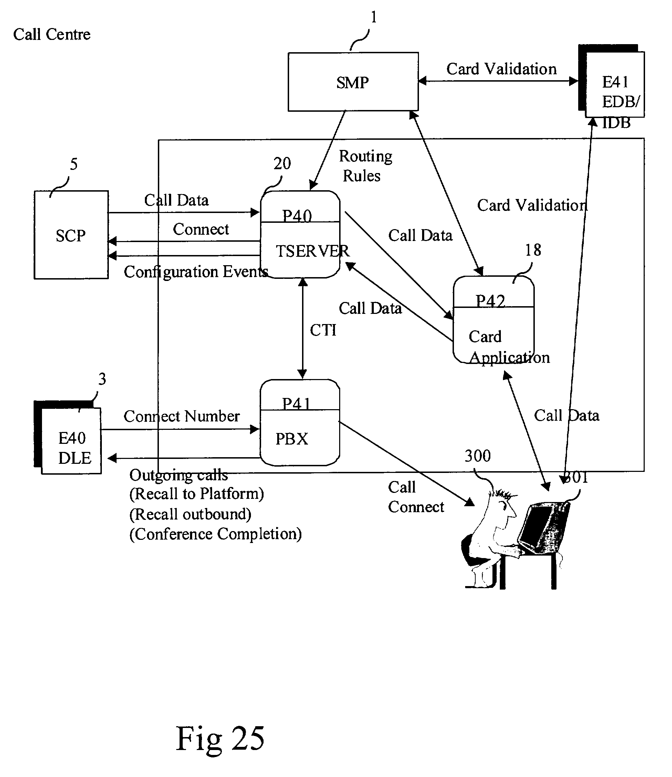

Turning now to Figure 25, if it is determined by an SFB that the call is to be referred to an operator, then the call is connected through the network to a call centre of which there may be more than one. In particular, an incoming call can be routed to a specific queue in a call centre or to a specific call centre in dependence upon the session context data information, for example, for specific support in an appropriate language. The SCP 5 is responsive to drop back information from the SMP 1, which information may include the transfer purpose, the customer account number, the PIN entered and the destination number as well as the originating connection number. Any or all of these fields may be present and other specific fields in dependence upon the stage at which the call drops back through the operator SFB 240.

This data is transferred by the SCP to a genesis t-server P40 which uses the received data to return a T-server connection number to the SCP which determines the operator to which the call is to be connected. When the call arrives at the call centre PBX P41, control means correlate the SCP call context by a connection number and causes connection of the incoming call from the DLA 3 though the PBX 41 to the selected operator 300. At the same time the card application P42 receives data from the T-server 40 and that information is transferred simultaneously with the call connect through the PBX so that the available data is displayed on screen 301 to facilitate operator assistance. If the operator is able to correct the data and/or validate the account information, then the card application 18 at the call centre may transfer call data via the server P40 to the SCP 5 thereby enabling the call to be completed on behalf of the customer. Should the operator be unable to validate the data, which may include updating the credit management process, then the call may be transferred to another operator who can effect card renewal or change of account number of may carry out a fraud investigation.

Card validation information held in the database 41 enables operators to verify account number , PINs and the validity of the card in respect of the call being attempted.

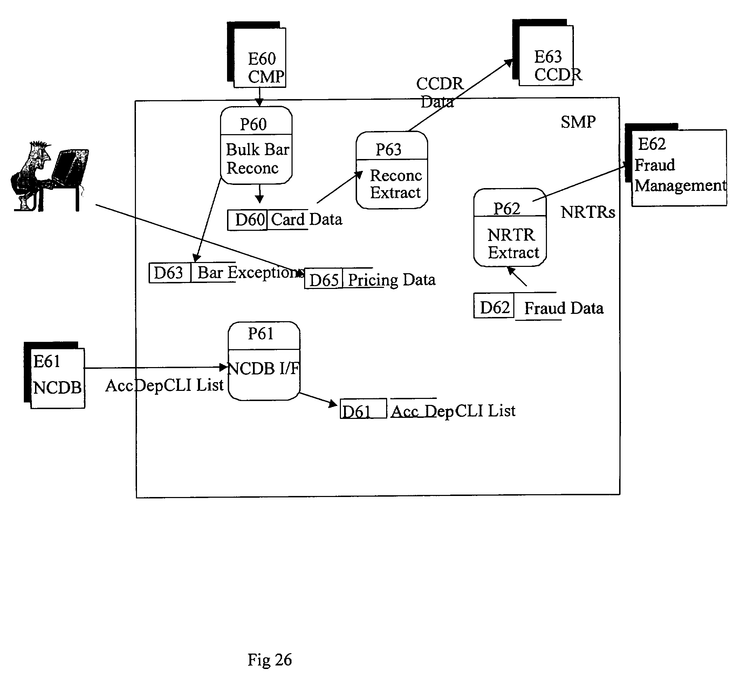

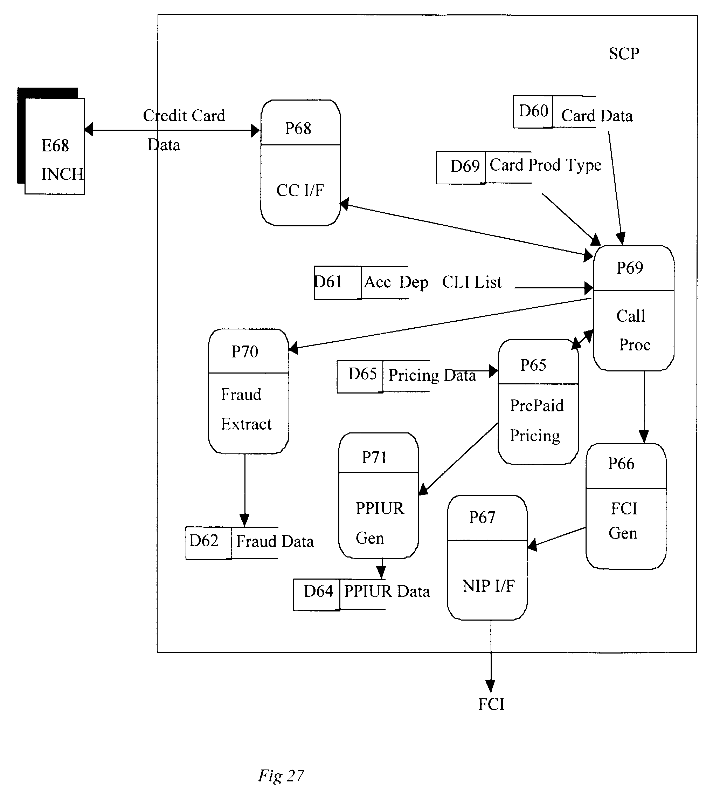

Figures 26 and 27 show pricing reconciliation and fraud limitation data flows in respect of pre-paid and post-paid account card calling. In particular in regard to pre-paid calling it is necessary for the credit management process to determine the current cost of the call and to ensure that funds continue to be available on the account to continue the call or to give warning of imminent call disconnection for example.

Looking specifically at Figure 26 for post-paid cards, a credit management function E60 holds customer card information such as credit limits and monitors the spend against the card. If the credit limit is exceeded then the credit management process bars the card by passing card information to a barring program P60 which is consulted by the SFBs previously described. The barring function P60 passes barring information to card data stores D60 and provides information for exceptions, such as for emergency calls or calls to a call centre, also shown is the national charging database E61 from which call charges can be determined. Within the UK network NCDB has been developed to maintained one set of charging data used by all exchanges so that charge bands, charge groups, tariff rates and tariff times can be readily ascertained by any digital switch. Thus a software interface P61 is provided, the software receiving from the NCDB access dependent pricing data which may depend on the CLI or the calling equipment type.

Also shown is a charge card data reconciliation unit E63 which is arranged to maintain consistency between the card data stored in D60 and that held in the SMP 1. the CCDR receives extracts of card data from the SMP and compares this with extracts from customer data and from the card management process E60 giving the card barring status. Differences between the SMP data and the card data in D60 are logged and passed for correction either to an automatic process or by way of operator intervention. Finally, a fraud management process E62 is shown which uses artificial intelligence to understand pattern of fraudulent use and in particular to determine potential new patterns of fraudulent use. This entity may be used to cross a portfolio of products including individual card accounts and by predicting the probability of fraud in any particular call may achieve a high success rate in revenue protection.

In One example the entity e62 uses call patterns and checks to see if they diverge from normal usage expected from a particular type of account card or customer. The fraud information extraction may result in reference to an operator by default management function.

Note that fraud data is transferred by SFBs to a data store D62 for handling by the fraud management process.

Turning now to Figure 27, where pre-paid account cards are in use, it is necessary to price calls in real-time and to determine credit left on a particular account and the maximum call time which may be permitted. A furnish charge information process receives information which enables it to populate a call record for a particular call. Information is passed to the furnish charge information process by way of the call process which determines from card data and card products type the validity of calls and passes that information across to the charge information process. The call process P69 which has previously been described with reference to the SFB, provides billing specific information. The call context data is used both for the call handling logic and for providing billing informaiton. The call context data is required by the pre-paid pricing process P65. Card type information data which defines the type of apparatus from which the call originated may be used so that the type of apparatus is determined for use by the pre-paid pricing process. Where a particular account call is only permitted from a certain CLIs then the access dependence CLI list of D61 in relation to the particular card is consulted and provided that the current date is within effective start and end dates held for the CLIs in D61. The SCP 5 will read the accessed method and include them in the furnish charge information message. Thus at the beginning of a pre-paid call, for example, pre-paid pricing process P65 calculates the maximum call duration that is possible given the remaining credit on the card using the pre-paid pricing data from D65 and the account value remaining from card data D60. This enables two timers to be set, a first to generate a time remaining warning tone to a card holder when a predetermined time remains on the card and a second timer which is used to terminate the call if credit fully expires without another card being provided or a top up being received by way of the credit card data transfer information. Once a call has been completed, either by the call clearing in normal manner or by being forcibly terminated when a credit expires, the pricing process will decrement the value from the account card and adjust the data held in relation to the particular account card accordingly.

It will be appreciated that the present card service platform provides a flexible arrangement for handling many different types of account, for providing national and international service to customers and for monitoring for potential fraudulent usage of cards. While, for example, specific types of card have been mentioned herein, the invention is not limited to such card types and other new card account and non card accounts may be provided, the term card account merely being used to indicate a flexible accounting system not limited to a specific customer line. Other means of identification other than, for example, a PIN may be used and the card platform may be used for providing accounting control for automatic reverse charging using a dedicated number for example.

## Claims

1. A telecommunications network service platform responsive to incoming signals indicative of an account type call to establish a call handling session and in respect of each such session to establish a session context data store to which call specific data is written, the call handling system comprising a multiplicity of service function blocks and means responsive to data derived from network signals to select from the multiplicity of service function blocks a sequence of service blocks for providing service and effecting call handling, each service function block utilising specific parameters from the session context data in combination with input signalling to determine further progress and to amend parameters held in the session context data for use by subsequent service function blocks.

2. A telecommunications network service platform as claimed in claim 1, in which each account type call is represented as a card within data storage each such card belonging to one of a plurality of product types, the product type determining the selection of service function blocks.

3. A telecommunications network service platform as claimed in claim 2, in which each card has associated therewith a plurality of respective data store spaces to permit storage of data defining network destinations.

4. A telecommunications network service platform as claimed in claim 2 or claim 3, in which at least one card product type is associated with one or more fixed network destinations, the platform including means responsive to card identity to cause set up of a call to the specification destination.

5. A telecommunications network service platform as claimed in any preceding claim, in which some parameters in the session context data are fixed for the duration of the call handling session, other parameters being modified or modifiable by service function blocks.

6. A telecommunications network service platform as claimed in any preceding claim, including means responsive to invalid entry to cause connection of a call through a telecommunications network to an operator.

7. A service management platform as claimed in any preceding claim, including means responsive to a credit management process to update session context data, the platform including means responsive to the credit management process to bar or unbar calls.

8. A service management platform as claimed in any preceding claim, including means responsive to data held in a data store, said data determining charging patterns reflecting destination, time of day and other charge affecting parameters, the platform including a service functional block to apply derived charging to credit value held against an account and to effect call disconnection on expiry of credit.
